# EUROPÄISCHE PATENTSCHRIFT

(11) **EP 2 044 665 B1**
(45) Veröffentlichungstag und Bekanntmachung des Hinweises auf die Patenterteilung: **11.12.2013**
(21) Anmeldenummer: 07785520.3
(22) Anmeldetag: 10.06.2007
(51) Int. Cl.: H02G 3/22, H02G 15/04, H02G 3/06

(54) **KABELDURCHFÜHRUNG MIT MEMBRANVENTIL**
CABLE BUSHING WITH DIAPHRAGM VALVE
PASSAGE DE CÂBLE AVEC SOUPAPE À MEMBRANE

(30) Priorität: 25.07.2006 DE 102006034224
(43) Veröffentlichungstag der Anmeldung: 08.04.2009
(73) Patentinhaber: Hidde, Axel R., 57076 Siegen (DE); Klose, Odo, 42285 Wuppertal (DE)
(72) Erfinder: Hidde, Axel R., 57076 Siegen (DE); Klose, Odo, 42285 Wuppertal (DE)
(86) Internationale Anmeldenummer: PCT/DE2007/001016
(87) Internationale Veröffentlichungsnummer: WO 2008/011854

(56) Entgegenhaltungen:
- EP-A- 1 202 616
- EP-A2- 1 220 407
- DE-U1-202005 011 301
- GB-A- 1 163 901

## Beschreibung

Die Erfindung betrifft eine atmungsaktive Kabel-/Schlauchdurchführung zur mechanisch und einseitig hydroskopisch dichten Durchführung eines geschirmten oder ungeschirmten elektrischen Kabels mit oder ohne Zugentlastung und mit oder ohne Biegeschutz für dieses Kabel durch eine Öffnung in einer Gehäusewand, die mit einem semipermeablen Filter- oder Membranventil abgeschlossenen Luftkanal ausgestattet ist und 3-teilig bestehend aus Oberteil, Mittelteil und Unterteil ausgeführt ist. Eine derartige Durchführung nach dem Oberbegriff von Anspruch 1 ist aus dem Dokument DE-U-20 2005 011 301 bekannt.

Kabel-/Schlauchdurchführungen in geschlossene Gehäuse, mit und ohne Zugentlastung, auch wasser- und explosionsgeschützter Art und mit oder ohne elektromagnetischer Abschirmung mit oder ohne Biegeschutz nach Schutzart klassifiziert, sind aus dem Stand der Technik bekannt. Derartige Kabeldurchführungen sind auch bekannt unter anderen technischen und kommerziellen Begriffen, wie Kabel-/Leitungs-Durch-führung, --Durchführungseinrichtung, --Durchführungsverschraubung, --Durchführungsvorrichtung, --Einführung, --Einführungseinrichtung, --Einführungsverschraubung, Einführungsvorrichtung, --Verschraubung, Schlauchverschraubung, etc.

Derartige Kabel-/Schlauchdurchführungen werden für unterschiedlichste Anwendungen benötigt und sind entsprechend vielfältig ausgeformt. Sie werden je Verwendungszweck aus Kunststoff und/oder Metall hergestellt, enthalten zusätzliche Scheiben und/oder Dichtungen/Dichtringe/Tüllen und unterschiedliche Zugentlastungen nach Anforderung, wie Quetschung oder Schelle. Kabeldurchführungen und/oder ihre Einzelteile sind genormt; in der Installationstechnik werden Kabeldurchführungen alter Bauart unter der Bezeichnung Panzerrohrgewinde (Pg)-Verschraubung mit nichtmetrischem Gewinde, Pg7 ... Pg48, entsprechend neuer Bauart mit metrischem Gewinde M12 ... M63, gehandelt.

Kabel-/Schlauchdurchführungen bestehen aus einem Abschnitt Zylinder mit meist beidseitigem Gewinde und einem Anschlag, der den dichtenden Abschluß zu einer Wandung bildet. Zur Befestigung wird entweder der Abschluß mit der Wandung verschraubt - der Abschluß enthält umlaufend Bohrungen - oder der Zylinder wird wandungsrück-/gehäuseseitig mit einer Gegen-/Kontermutter verschraubt. Auf der Seite der Kabeleinführung gibt es entweder eine Kabeltülle mit Dichtung und Scheibe und/ oder eine angespritzte oder lose Kabelkralle, wobei das Kabel durch eine Hutmutter dichtend gequetscht wird, oder auch eine Schraubschelle mit Dichtung und angespritztem Kabelbiegeschutz. Zubehörteile sind bekannt als Dichtungs-/Würgenippel und Blindstopfen/Verschlußschrauben.

Die Anwendungen erstrecken sich von Anschluß-, Schalt- und Verteilerkästen der Installations-/Gerätetechnik der Gebäudesystem- und Anlagentechnik bis zu Anwendungen der Luft- und Raumfahrt, der Verkehrstechnik sowie maritimen Anwendungen. Aufgrund der Vielfältigkeit der Applikationen wird die obige, grobe Beschreibung nicht vertieft.

Im folgenden wird der Stand der Technik bezogen auf die Kabel-/Leitungs-/Schlauchdurchführungen gewürdigt.

Gebrauchsmusterschrift DE 91 10 007/europäische Patentschrift EP 527 368 betrifft eine Kabeldurchführungsvorrichtung zur elektromagnetisch dichten Durchführung eines geschirmten elektrischen Kabels durch eine Trennwandöffnung mit im Durchführungsbereich von einem Kabelmantel freigelegten elektrischen Schirm und mindestens zwei in radialer Richtung ansetzbaren, elektrisch leitenden Teilschalen, deren Innenprofil an das Außenprofil des Schirms angepaßt ist.

Das Schutzrecht betrifft die elektromagnetische Abschirmung bei Kabeln und Durchführungen.

Gemäß deutscher Patentschrift DE 102 23 198/europäisches Patent EP 1 365 494 wird eine metallene, an diversen Druckstellen des Kabelmantels mit Kunststoff überzogene Kabeldurchführung an einem Elektrogerät, insbesondere in einem Schienenfahrzeug, vorgestellt, wobei das Kabel durch ein Kabelführungsrohr geführt wird und mindestens an einer Anlagefläche durch eine Druckschraube haltend verpreßt wird. Die Offenbarung beschränkt sich auf die Erklärung der dichtenden Kabeldurchführung.

Im folgenden wird der Stand der Technik bezogen auf die Kabel-/Leitungs-/Schlaucheinführungen gewürdigt.

Die österreichische Patentschrift AT 266 241 sieht eine Kabeleinführung mit Membran-Durchsteckdichtung und Schlauchklemmung zur Zug- und Druckentlastung vor. Das Oberteil der Kabeleinführung besteht aus dem Kabeleinführungsstutzen und der angespritzten, den Kabelmantel umschließenden Dichtungsmembran als zusammengehörende Einheit. Weiterhin kann den Kabeleinführungsstutzen um das durchgeführte Kabel eine Schlauchklemme umgeben.
Die angespritzte Membran des Kabeleinführungsstutzens umschließt den Kabelmantel dicht; hat aber mit der Dichtheit des Gehäuses nichts gemein.

Im folgenden wird der Stand der Technik bezogen auf die Kabel-/Leitungs-/Schlauchverschraubungen gewürdigt.

Das deutsche Gebrauchsmuster DE 76 22 470 stellt eine Kabelverschraubung mit Dichtung, Zugentlastung und Verdrehungssicherung vor, die zur Ein- und Durchführung, Abdichtung und Zugentlastung von Kabeln, Leitungen und anderem fadenförmigen Gut, mit Verdrehungssicherung des Zwischenstutzens und der Druckschraube im montierten Zustand eine besondere geometrische Ausbildung aufweist. Der hohlzylindrische, einstückige Zwischenstutzen enthält an seinem Wirkbund koaxial angeordnete Klemmzungen, die mittels schräg angebrachter Schlitze bei Gegendruck durch die Druckschraube nach innen gleiten und dadurch das Kabel schonend umspannen.

Die mit dem Zwischenstutzen einstückig verbundenen Klemmzungen ermöglichen auf Grund ihres Aufeinandergleitens bei axialem Gegendruck einen großen Klemmbereich. Die Veröffentlichung gibt keinen Hinweis auf eine 'atmende' Verschraubung. Die deutsche Patentanmeldung DE 694 13 494/europäische Patentschrift 651 486 nennt Verbesserungen an Dichtungsanordnungen für eine Kabelverschraubung für die Luft- und Raumfahrt bei Durchgang von druckbehafteten in drucklose Räume oder umgekehrt derart, daß der bisher eingesetzte, kabelführende und durch SilikonKautschuk druckgedichtete Elastomer-Stöpsel durch eine die Dichtungsmasse aufnehmende Kabeldichtungsbuchse mit Trennwandgehäuse ersetzt wird.
Die Druckdifferenzen zwischen den Trennwänden übersteigen bei weitem die angesprochenen, atmosphärischen Druckverhältnisse normaler, industrieller Anwendungen.

Eine hochdruckfeste Leitungsdurchführung, die zudem kostengünstig herstellbar und unempfindlich gegenüber Stößen und Temperaturschwankungen ist, z.B. für ölhyd-, raulische Geräte o.ä., wird in dem deutschen Gebrauchsmuster DE 89 05 733 vorgestellt, wobei der Isolierkörper aus einer glasfaserverstärkten Kunststoffscheibe mit Durchgangsbohrungen für Leiter besteht, der Isolierkörper mit Preßsitz im Durchgangskanal und die Leiter mit Preßsitz in den Durchgangsbohrungen des Isolierkörpers sitzen und der Isolierkörper und die Leiter an ihren Umfangflächen zusätzlich zum Preßsitz in ihre jeweiligen Aufnahmen eingeklebt sind.
Die Druckdifferenzen zwischen den Trennwänden übersteigen bei weitem die angesprochenen, atmosphärischen Druckverhältnisse normaler, industrieller Anwendungen.

Diese Anschluß-, Schalt- und Verteilerkästen - so sie nicht Innen vollkommen vergossen sind - unterliegen - sowohl bei Anwendungen im Innen- wie im Außenbereich physikalischen Gesetzen, wie der Bildung von Innenfeuchtigkeit bis Wasser aufgrund von Temperatur- und Druckwechseln, Stichwort Taupunkt-Wasserbildung. Bei preissensiblen Anwendungen im Außenbereich wird der Hohlkörper des Anschluß-, Schalt- und Verteilerkastens mit wasserabführenden Durchgangsbohrungen versehen. In der Installationstechnik werden häufig - schutzartabhängig - diese Bohrungen durch Filter, Labyrinthe, Membrane, Schikanen oder Ventile ergänzt, um von Außen eindringendes Wasser abzuweisen. Bei Applikationen der Verkehrstechnik hilft der teure, nicht umweltfreundliche Gehäuse-Innenverguß unter Luftabschluß. Eine preiswerte, alternative Lösung stellt die Schaffung von semipermeablen Gehäuseöffnungen dar. Hierbei werden die Gehäuseöffnungen durch Filter ergänzt, die nur in einer Richtung eine Öffnung durch Mikroporen aufweisen, Filter oder Membranventile.

Im folgenden wird der Stand der Technik bezogen auf die Filter- oder Membrantechnik gewürdigt.

Gemäß deutscher Offenlegungsschrift DE 103 00 063/internationale Anmeldung WO 2004 062 318 wird eine Membran für einen akustischen Wandler vorgeschlagen, umfassend eine Polymerschicht mit einem vorgegebenen Flächengewicht, wobei die Polymerschicht mit einem Metall beschichtet ist, so daß die Membran einer gewünschten Flächenladungsdichte auf einen EI-Wert <22 mg/µC elektrostatisch aufladbar ist, insbesondere <20 mg/µC, wobei der EI-Wert definiert ist als Quotient von Flächengewicht der Polymerschicht zu Flächenladungsdichte.
Die geschützte Anordnung betrifft keine Kabeldurchführungen o.ä.

In der deutschen Patentschrift DE 690 05 198/europäische Schrift EP 401 486 wird eine selektivdurchlässige Membran mit Durchlässigkeit für Wasserdampf, deren Eigenschaft zur Abtrennung von Wasserdampf vom Dampf wässriger Säuren und zum Feuchtigkeitsentzug und Abtrennung industriell nützlicher Gase sowie zum Schutz von Instrumenten und Sensoren verwendet werden kann und stabiles Leistungsvermögen aufweist. Die selektivdurchlässige Membran umfaßt einen dünnen Film aus Polyacrylnitril-Harz, das etwa 0,5% ... 10% Sulfonsäuregruppen enthält, der auf einem porösen Tetrafluorethylen (PTFE) oder Polyolefinfilm aufgetragen ist.
Die Erfindung eignet sich ggf. als Membranwerkstoff, über den Anwendungsbezug Kabeldurchführung ist keine Angabe gemacht.

Die deutsche Patentschrift DE 41 17 281 offenbart eine hydrophilierte, mikroporöse Membran aus Polytetrafluorethylen (PTFE) und einem Hydrophilierungsmittel für Fest-flüssig-, Flüssig-flüssig-, Flüssig-gasförmig- und Gasförmig-gasförmig-Trennprozesse, wie z.B. für Mikrofiltration, Umkehrosmose, Dialyse, Elektrodialyse und Gastrennung, sowie ein Verfahren zur Herstellung der Membranen. Die PTFE-Membran unterliegt keinen Einsatzbeschränkungen.
Die Erfindung eignet sich ggf. als Membranwerkstoff, über den Anwendungsbezug Kabeldurchführung ist keine Angabe gemacht.

Gemäß Gebrauchsmuster 'Kabeldurchführung mit Membranventil', Gebrauchsmusteranmeldung Nr. DE 20 2005 011 301 U1, wird eine solche atmungsaktive Kabel-/ Schlauchdurchführung zur mechanisch und einseitig hydroskopisch dichten Durchführung eines geschirmten oder ungeschirmten elektrischen Kabels mit oder ohne Zugentlastung mit oder ohne Biegeschutz für dieses Kabel vorgestellt. Es wurde beschrieben, daß Kabeldurchführungen bauartklassifiziert werden, nach alter Bauart mit nichtmetrischem Gewinde Pg7 ... Pg48 und nach neuer Bauart mit metrischem Gewinde M12 ... M63, wobei das Maß für die Befestigungsbohrung für die Kabeldurchführung - Maß des Gewindestutzens, unten - und der Kabeldurchmesser für diese Kabeldurchführung aufeinander abgestimmt sind.

Beim Stand der Technik nach DE-U-20 2005 011 301 wird angenommen, daß sich beim Einsatz von Kabeldurchführungen mit Membranventil bei festgelegtem Kabeldurchmesser das Maß für die Befestigungsbohrung wegen des Luftkanals um eine Klasse erhöht. Da bei handelsüblichen Installationsgehäusen bereits Ausbruchhilfen und Vorstanzungen für Kabeldurchführungen vorgesehen sind, die nach Anzahl und Größe dem Verwendungszweck des Gehäuses angemessen wurden, könnte sich der Einsatz derartiger Kabeldurchführungen nachteilig auswirken.

Der Erfindung liegt daher die Aufgabe zu Grunde, eine Einrichtung nach dem Oberbegriff des Anspruchs 1, eine atmungsaktive Kabel-/Schlauchdurchführung zur mechanisch und einseitig hydroskopisch dichten Durchführung eines geschirmten oder ungeschirmten elektrischen Kabels mit oder ohne Zugentlastung mit oder ohne Biegeschutz für dieses Kabel durch eine Öffnung in einer Gehäusewand unter Umgehung obigen Nachteils zu schaffen, so daß die Führung des Luftkanals der Kabel-/ Schlauchdurchführung so ausgeprägt ist, daß die bekannte handelsübliche Relation durchführbarer Kabeldurchmesser zum Maß für die Befestigungsbohrung der Kabeldurchführung erhalten bleibt.

Diese Aufgabe wird erfindungsgemäß mit Hilfe der kennzeichnenden Merkmale des Anspruchs 1 gelöst.

Vorteilhafte Ausgestaltungen der Erfindung gehen aus den Unteransprüchen hervor.

Die mit der Erfindung erzielten Vorteile bestehen - neben der Verhinderung der Bildung von Feuchtigkeitsniederschlag innerhalb geschlossener Räume - insbesondere darin, daß handelsübliche, auf dem Installationsmarkt bekannte Teile vom Installateur verbaut werden und keine zusätzlichen Vorkehrungen getroffen werden müssen, da derartige Anwendungen oft auf minimale räumliche und gewichtsmäßige Abmessungen ausgelegt sind.

Bevorzugte Ausführungsbeispiele des Erfindungsgegenstands sind in den Zeichnungen dargestellt und werden im folgenden näher beschrieben. Es zeigen
- **Fig. 1**: Perspektivische Darstellung der mehrstückigen Kabeldurchführung
- **Fig. 2**: Teilweise zerlegte Kabeldurchführung in Perspektive
- **Fig. 3**: Perspektivische Darstellung der mehrstückigen Kabeldurchführung, hälftig längsgeschnitten
- **Fig. 4**: Teilweise zerlegte Kabeldurchführung in Perspektive, hälftig längsgeschnitten.

Gleiche und gleichwirkende Bestandteile der Ausführungsbeispiele sind in den Figuren jeweils mit denselben Bezugszeichen versehen.

Die Beschreibung der erfindungsgemäßen Einrichtung wird fortgesetzt anhand der Erläuterungen der Bilder.

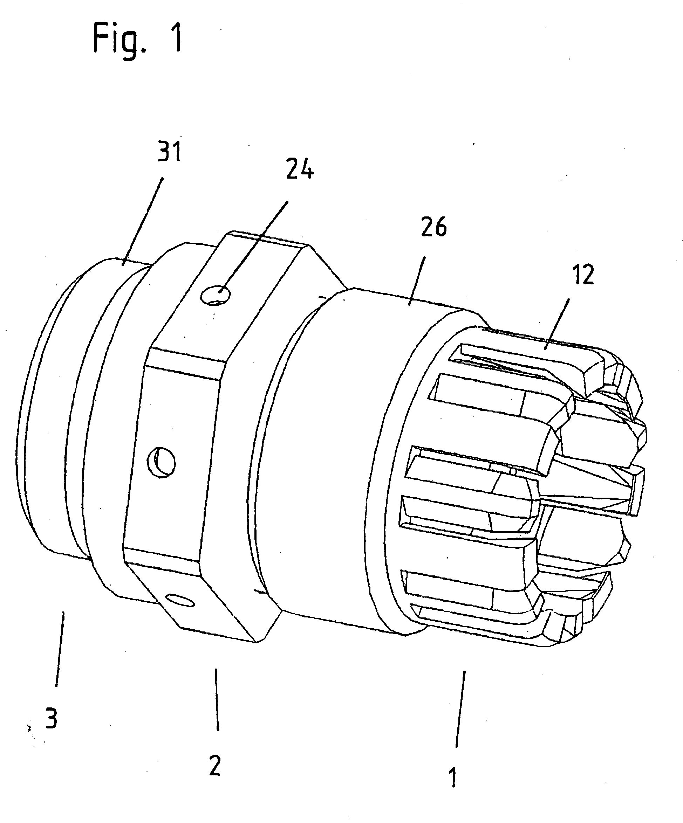

Wie aus **Fig. 1** ersichtlich, besteht die mehrstückige, atmungsaktive Kabel-/ Schlauchdurchführung aus Oberteil **1,** Mittelteil **2** und Unterteil **3.**

Bei der Ausführungsvariante A 'Material Metall' - z.B. Messing - wird das Oberteil **1** aus Kunststoff gefertigt; bei der Ausführungsvariante B 'Material Kunststoff' kann Ober- **1** und Mittelteil **2** auch einstückig sein.

Das Oberteil besteht aus einem Hohlzylinder, der in einer angespritzten Kabelkralle **12** mündet, dem für den entsprechenden Kabelaußendurchmesser vorbereiteten Kabeldichtring **13** und der die Kabeldichtung und -zugentlastung durch Kabelquetschung hervorrufenden Hutmutter **14.** Der Hohlzylinder bildet innenseitig die Kabelführung **15** und außenseitig eine keilförmig zulaufende Preßverbindung **18** zum Mittelteil (Variante A); bei der Variante B kann die Preßverbindung entfallen. In die Nut **19** kann eine zusätzliche Dichtung **191 -** O-Ring, o.ä. - eingebracht werden.

Weiterhin wird das zwischen Ober- und Unterteil, im Mittelteil **2,** fest gefügte semipermeable Filter/Membranventil **21** in Form eines Zylinderrings gezeigt. Bei derartigen Filtern/Membranen handelt es sich meist um ein Kunststoffmaterial aus Polymer/Polypropylene oder expandierte Polytetrafluorethylene, welches durch seine symmetrische Porenstruktur hydrophobischen Charakter aufweist, eine weite chemische Verträglichkeit besitzt, für Temperaturen zwischen -40°C ... +125°C anwendbar ist und bei einer Temperatur von 23°C eine Filter-/Membrandurchlässigkeit von >10 ml/[min x cm² x bar] aufweist.

Die das Filter/Membranventil **21** haltenden Teile - Stütz- und Dichtring **22 -** zwischen Mittel- **2** und Unterteil **3** können auch so ausgeprägt sein, daß das semipermeable Filter/Membranventil austauschbar gestaltet ist.

Filter/Membranventil **21** und Stütz- und Dichtring **22** können auch eine fest gefügte Baugruppe bilden.

Die Formgebung des Filter/Membranventils **21** ist mit der Formgebung des zu dichtenden Lüftungskanals **25, 32** in Übereinstimmung.

Weiterhin besteht das Mittelteil **2** aus der Kabelführung **23,** den Bohrungen des Lüftungskanals Außensechskant **24** sowie dem innen umlaufenden Lüftungskanal **25.** Nach oben, zum Oberteil hin, schließt das Mittelteil mit dem Gewindestutzen **26** zur Aufnahme der die Zugentlastung bildenden Hutmutter ab.

Darüber hinaus ist eine Ausführungsform des Unterteils **3** der atmungsaktiven Kabel/Schlauchdurchführung dargestellt. Diese besteht aus einem hohlzylinderförmigen Gewindestutzen **31,** der innenseitig mit dem Innenzylinder **34** abschließt. Das Unterteil schließt zum Mittelteil durch einen Flansch **36** ab, dessen schräg sitzende Bohrungen **32** den Luftkanal/Lüftungsweg ins Gehäuseinnere fortsetzen.

Die dichte Metallverbindung zwischen Unter- **3** und Mittelteil **2** kann durch Verpressen oder Stauchen der über den Flansch hinausragenden zylinderförmigen Ränder des Mittelteils erfolgen (Variante A). Auch kann die Dichtheit der beiden Teile durch eine Schraubverbindung hergestellt werden. Für den Fall, daß die Kabel-/Schlauchdurchführung aus Kunststoff gefertigt ist, können Unter- und Mittelteil miteinander verklebt oder verschweißt werden (Variante B).

Die Dichtung des Unterteils **3** in der Gehäusewandung erfolgt üblicherweise durch einen über den Gewindestutzen **31** gestülpten O-Ring **35** und Verschraubung in Gewinde oder mit Kontermutter.

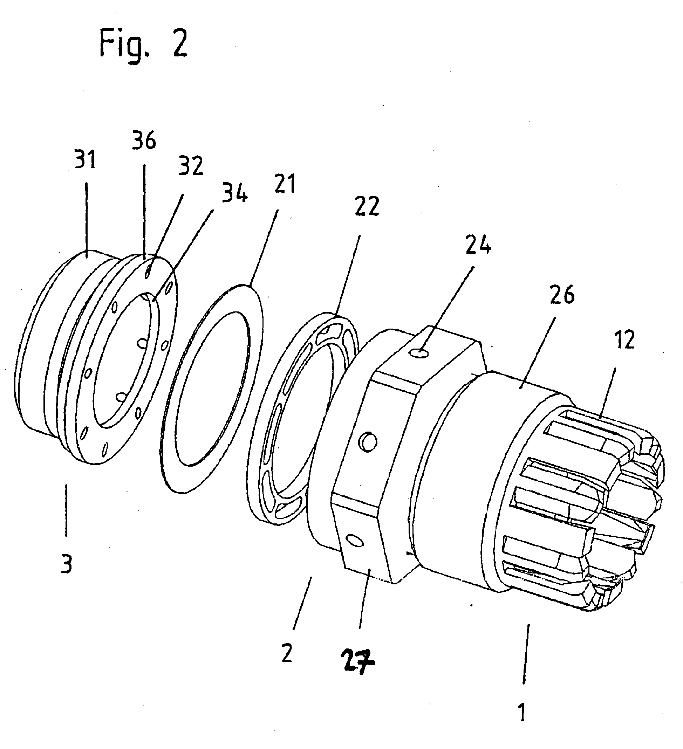

**Fig. 2** zeigt die teilweise geöffnete Kabel-/Schlauchdurchführung in Perspektive. Der Zusammenbau der Teile kann unterschiedlich erfolgen, wie z.B. durch Klebung, Ultraschall-Schweißung, als Einlegeteil umspritzt, etc. Weiterhin kann auch Unter- **3** und Mittelteil **2** durch entsprechende Vormontage und -behandlung einstückig werden.

Kabellose Kabel-/Schlauchdurchführungen können durch den unvorbereiteten, geschlossenen Dichtring **13** und die verschraubte Hutmutter **14** abgedichtet werden - und wirken wie Dichtungs-/Würgenippel und/oder BlindstopfenNerschlußschraube - so daß die kabellose Kabel-/Schlauchdurchführung auch oder zusätzlich als semipermeable Gehäuselüftung mit Membranventil - wie ein Druckausgleichselement (DAE) - genutzt werden kann.

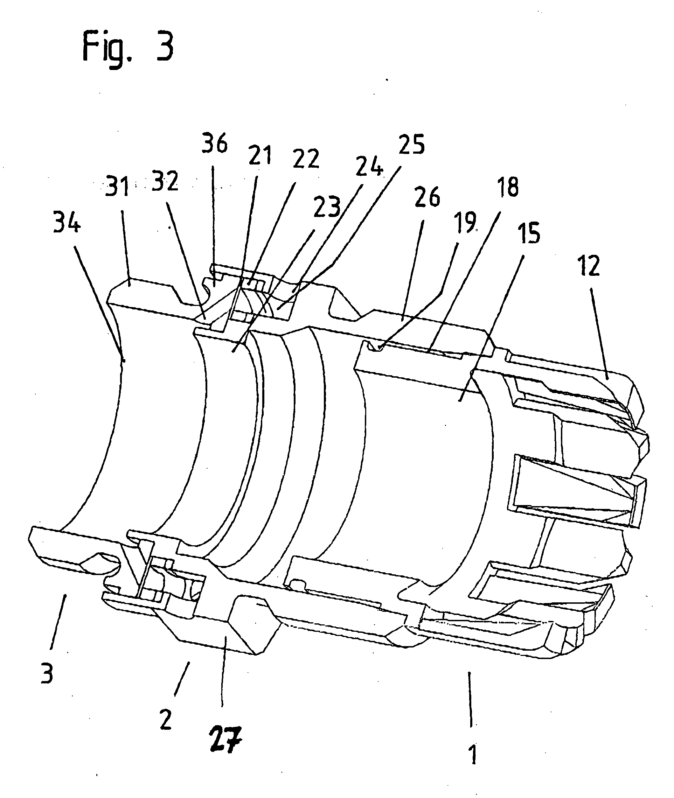

**Fig. 3** zeigt die perspektivische Darstellung der mehrstückigen Kabel-/Schlauchdurchführung, wenn sie in der Mitte hälftig längsgeschnitten ist. Die räumliche Fläche des Innenzylinders **34,** der Außenmantel des durchgeführten Kabels, abgelöst von den Bohrungen des Lüftungskanals **32** des Flanschs **36** des Unterteils **3,** mündend in dem semipermeablen Filter/Membranventil **21** mit Stütz- und Dichtring **22,** dem umlaufenden innenliegenden Lüftungskanal **25** sowie die Bohrungslöcher des Außensechskants **24** des Mittelteils **2** bilden die Entlüftung der Kabeldurchführung und bestimmen dessen Volumendurchsatz in Abhängigkeit von Druck und Temperatur.

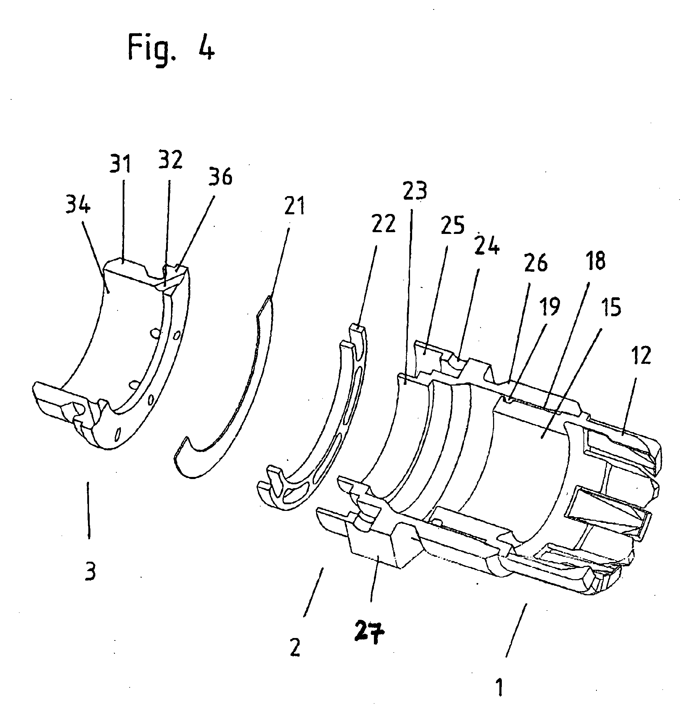

**Fig. 4** zeigt die teilweise geöffnete Kabel-/Schlauchdurchführung in Perspektive, wenn sie in der Mitte hälftig längsgeschnitten ist.

Kabel-/Schlauchdurchführungen werden üblicherweise nach dem metrischen Gewinde des Befestigungsstutzens **31** gehandelt unter Angabe des möglichen Kabeldurchmessers **15, 23** und der Schlüsselweite des Außensechskants **24.** Vorteilhaft gegenüber der Kabeldurchführung des Standes der Technick nach DE-U-20 2005 011 301 ist bei der vorgestellten atmungsaktiven Kabel-/Schlauchdurchführung neuer Bauart die Berücksichtigung der Querschnittsfläche des Luftkanals, so daß für einen gegebenen Kabeldurchmesser **15, 23** kein größeres Stutzenmaß **31** anzusetzen ist, das von dem geforderten Volumen/Abmessung des Lüftungskanals abhängig ist.

Eine weitere Ausgestaltung der Erfindung sieht vor, daß es sich bei dem Gewinde des Gewindestutzens nicht zwingend um metrisches Gewinde handeln muß - berücksichtigt ist Panzerrohrgewinde (Pg) - so daß die erfinderische Neuheit auch als Ersatz-/Ergänzungs-Bauteil Verwendung findet.

Eine weitere Ausprägungsform der erfinderischen Neuheit ist dadurch gegeben, daß der Gewindestutzen des Unterteils nicht geschraubt, sondern rastbar haltend, durch zusätzlichen O-Ring dichtend mit der Wandung des Gehäuses verbunden wird.

Als alternative Zugentlastung der Erfindung ist der Einsatz einer am Oberteil seitlich geführten Madenschraube mit zwischen Stutzen und Kabelmantel angeordneter/m Dichtung/Schutz gegeben; Gewindestutzen und Kabelkralle werden zu einem Stutzen verkürzt, Dichtring und Hutmutter entfallen.

Ein um den Gewindestutzen verkürztes Oberteil ergibt sich auch, wenn die Zugentlastung über den Dichtring und durch eine entsprechend ausgeformte Kabelkralle mit Kabelbinder oder -schelle hergestellt wird; die Hutmutter entfällt.

Gemäß einer weiteren Ausprägung der Kabel-/Schlauchdurchführung wird die Zugentlastung über den Dichtring und durch eine entsprechend ausgeformte Kabelkralle und Hutkappe rastend eingerichtet.

Gemäß einer weiteren Ausgestaltung der Erfindung kann der Lüftungskanal auch unsymmetrisch ausgeprägt und angeordnet sein, entsprechend auch das semipermeable Filter/Membranventil.

Eine weitere Ausprägung der Erfindung sieht vor, daß der Lüftungskanal der Kabel-/ Schlauchdurchführung mehrfach angelegt sein kann und entsprechend durch Mehrfachfilterung abgeschlossen ist.

Ein weiterer Anwendungsbezug der mehrkanaligen Lüftung liegt darin, daß die semipermeablen Filter/Membranen unterschiedliche Porosität/Durchgangszahlen aufweisen und damit für unterschiedliche Stoffe wirksam werden.

Eine weitere vorteilhafte Ausgestaltung der Erfindung ergibt sich dadurch, daß die atmungsaktive Kabel-/Schlauchdurchführung in ihrer Montage keiner Lageeinbauvorschrift unterliegt. Schutz vor dem Eindringen von Schmutzpartikeln oder Wasser ist gegeben; auch bei Über-Kopf-Montage ist durch abgeschrägte Kanten der Ablauf von Wasser möglich.

Eine weitere Ausgestaltung der Erfindung sieht vor, daß die atmungsaktive Kabel-/ Schlauchdurchführung als aneinanderreihbares Kabeleinführungsmodul im Schaltschrankbau Verwendung findet.

Die zahlreichen Möglichkeiten und Vorteile der Ausgestaltung der Erfindung spiegeln sich in der Anzahl der Schutzrechtsansprüche wider.

### Bezugszeichenliste

- 1: Oberteil Kabel-/Schlauchdurchführung

- 12: Kabelkralle
- 13: Dichtring (nicht dargestellt)
- 14: Hutmutter (nicht dargestellt)
- 15: Kabelführung
- 18: Preßverbindung
- 19: Ringnut
- 191: O-Ring (nicht dargestellt)

- 2: Mittelteil Kabel-/Schlauchdurchführung

- 21: Semipermeables Filter/Membranventil
- 22: Stütz- und Dichtring
- 23: Kabelführung
- 24: Lüftungskanal Außensechskant
- 25: Lüftungskanal, innen
- 26: Gewindestutzen, oben

- 3: Unterteil Kabel-/Schlauchdurchführung

- 31: Gewindestutzen, unten
- 32: Bohrung Lüftungskanal
- 34: Innenzylinder
- 35: O-/Flach-Dichtring (nicht dargestellt)
- 36: Flansch, durchbohrt

## Patentansprüche

1. Atmungsaktive Kabel-/Schlauchdurchführung zur mechanisch und einseitig hydroskopisch dichten Durchführung eines geschirmten oder ungeschirmten elektrischen Kabels mit oder ohne Zugentlastung mit oder ohne Biegeschutz für dieses Kabel durch eine Öffnung in einer Gehäusewand, die mit einem semipermeablen Filteroder Membranventil (21) abgeschlossenen Lüftungskanal (24, 25, 32) ausgestattet und 3-teilig bestehend aus Oberteil (1), Mittelteil (2) und Unterteil (3) ausgeführt ist,
**dadurch gekennzeichnet, daß**
- ein Außensechskant (27) Bestandteil des Mittelteils (2) ist und der Lüftungskanal am Außensechskant als Bohrungen (24), die senkrecht zur Durchführungsrichtung der Kabel-/Schlauchdurchführung verlaufen, ausgebildet ist,
- in Verlängerung der Bohrungen (24) ein Lüftungskanal im Inneren (25) des Mittelteils (2) zylinderförmig und senkrecht zu den Bohrungen verläuft und dort auf den Lüftungskanal des Unterteils (3) trifft, wobei
- das Unterteil zum Mittelteil durch einen Flansch abschließt und ein Lüftungskanal des Unterteils (3) als vom Flansch (36) schräg nach innen gerichtete, über den Flanschumfang verteilte Bohrungen (32) ausgebildet ist,
- eine Kabelführung (23) am Mittelteil (2) vor dem Austrittsbereich des Lüftungskanals (32) in axialer Richtung endet .

2. Atmungsaktive Kabel-/Schlauchdurchführung nach Anspruch 1, **dadurch gekennzeichnet, daß** die mehrstückige, atmungsaktive Kabel-/Schlauchdurchführung aus dem Oberteil (1), dem Mittelteil (2) und dem Unterteil (3) gefügt ist, wobei - materialbedingt oder durch entsprechende Vormontagen - auch mehrere Teile einstückig werden können.

3. Atmungsaktive Kabel-/Schlauchdurchführung nach mindestens einem der Ansprüche 1 oder 2, **dadurch gekennzeichnet, daß** das Oberteil (1) aus einem Hohlzylinder besteht, der in einer angespritzten Kabelkralle (12) mündet, einem für den entsprechenden Kabelaußendurchmesser vorbereiteten Dichtring (13) und einer die Kabeldichtung und -zugentlastung durch Kabelquetschung hervorrufenden Hutmutter (14), wobei der Hohlzylinder innenseitig die Kabelführung (15) und außenseitig eine hohlkegelförmig zulaufende Preßverbindung (18) zum Mittelteil (2) bildet.

4. Atmungsaktive Kabel-/Schlauchdurchführung nach mindestens einem der Ansprüche 1 bis 3, **dadurch gekennzeichnet, daß** zwischen dem dicht gefügten Mittel-(2) und Unterteil (3) ein semipermeables Filter/Membranventil (21) in Form eines Zylinderrings in einer zylinderförmigen, gestuften und zum Unterteil (3) hin geöffneten Aufnahme des Mittelteils (2) eingebracht ist, die zum Oberteil (1) hin den umlaufenden Lüftungskanal (25) beinhaltet und zum Unterteil (3) hin über den Flansch (36) desselben gedichtet wird, und welches in der anderen Richtung einen Gewindestutzen (26) zur Aufnahme der Hutmutter (14) für die Zugentlastung trägt.

5. Atmungsaktive Kabel-/Schlauchdurchführung nach mindestens einem der Ansprüche 1 bis 4, **dadurch gekennzeichnet, daß** ein Stütz- und Dichtring (22) vorgesehen ist, der als Teil des Mittelteils (2) das Filter/Membranventil (21) zum zylinderförmigen inneren Lüftungskanal (25) hin trägt und daß der Stütz- und Dichtring (22) und das Filter/Membranventil (21) ein- oder mehrstückig sein können.

6. Atmungsaktive Kabel-/Schlauchdurchführung nach mindestens einem der Ansprüche 1 bis 5, **dadurch gekennzeichnet, daß** das Unterteil (3) aus einem hohlzylinderförmigen Gewindestutzen (31) besteht, der mit einem übergestülptem O-Ring (35) versehen mittels Verschraubung in Gewinde oder mit Gegen-/Kontermutter in der Gehäusewandung dichtet, und der innenseitig mit dem Innenzylinder (34) abschließt und einen zum Mittelteil (2) sich aufweitenden Flansch (36) aufweist, dessen schräg sitzende Bohrungen (32) den Lüftungskanal vom Filter/Membranventil (21) mit Stütz- und Dichtring (22) ins Gehäuseinnere fortsetzen und der mit der zylinderförrnigen Aufnahme des Mittelteils (2) dicht gefügt ist.

7. Atmungsaktive Kabel-/Schlauchdurchführung nach mindestens einem der Ansprüche 1 bis 6, **dadurch gekennzeichnet, daß** die das Filter/Membranventil (21) haltenden Teile so ausgeformt sind, daß ein semipermeables Filter/Membranventil (21) austausch-/-wechselbar gestaltet ist und/oder auch in Verbindung mit dem Stütz- und Dichtring (22).

8. Atmungsaktive Kabel-/Schlauchdurchführung nach mindestens einem der Ansprüche 1 bis 7, **dadurch gekennzeichnet, daß** die Formgebung des Filters/Membranventils (21) der Formgebung des zu dichtenden Lüftungskanals angepaßt ist.

9. Atmungsaktive Kabel-/Schlauchdurchführung nach mindestens einem der Ansprüche 1 bis 8, **dadurch gekennzeichnet, daß** die räumliche Fläche des Innenzylinders (34), der Außenmantel des durchgeführten Kabels - abgelöst von den Bohrungen (32) des Lüftungskanals des Flanschs (36) des Unterteils (3), mündend in dem semipermeablen Filter/Membranventil (21) mit Stütz- und Dichtring (22) - der umlaufende innenliegende Lüftungskanal (25) sowie die Bohrungslöcher (24) des Außensechskants (27) des Mittelteils (2) die Be-/Entlüftung der Kabel-/Schlauchdurchführung bilden und deren Volumendurchsatz in Abhängigkeit von Druck und Temperatur bestimmen.

10. Atmungsaktive Kabel-/Schlauchdurchführung nach mindestens einem der Ansprüche 1 bis 9, **dadurch gekennzeichnet, daß** der Zusammenbau der Teile (1, 2, 3) der atmungsaktiven Kabel-/Schlauchdurchführung drehrichtungsunabhängig erfolgen kann.

## Claims

1. A breathable cable/tube gland for the mechanically and hydroscopically (on one side) sealed passage of a shielded or unshielded electric cable with or without strain relief with or without bending safeguard for this cable, through an opening in a housing wall, which is equipped with a ventilation channel (24, 25, 32) closed by a semi-permeable filter or diaphragm valve (21) and is constructed in three parts consisting of an upper portion (1), a centre portion (2) and a lower portion (3), **characterised in that**
- an outer hexagon (27) is part of the centre portion (2) and the ventilation channel on the outer hexagon is configured as bores (24) extending perpendicularly to the pass-through direction of the cable/tube gland,
- a ventilation channel, as an extension of the bores (24), extends inside (25) the centre portion (2) cylindrically and perpendicularly to the bores, where it meets with the ventilation channel of the lower portion (3), wherein
- the lower portion is terminated by a flange towards the centre portion, and a ventilation channel of the lower portion (3) is configured as bores (32) pointing obliquely inwards from the flange and distributed across the circumference of the flange,
- a cable guide (23) on the centre portion (2) ends in front of the exit area of the ventilation channel (32) in axial direction.

2. The breathable cable/tube gland according to claim 1, **characterised in that** the multi-piece breathable cable/tube gland consists of the upper portion (1), centre portion (2) and lower portion (3) joined together, wherein several parts may be be joined to form one piece, due to the kind of material used or due to using pre-assemblies.

3. The breathable cable/tube gland according to at least claim 1 or 2, **characterised in that** the upper portion (1) consists of a hollow cylinder which ends in a cable clamp (12) moulded-on by injection moulding, a sealing ring (13) adapted to match the corresponding cable external diameter and a cap nut (14) initiating the cable sealing and strain relief on the cable by squeezing it, wherein the hollow cylinder forms the cable guide (15) on the inside and a press-fit (18) extending in the shape of a hollow cone towards the centre portion (2) on the outside.

4. The breathable cable/tube gland according to at least claims 1 to 3, **characterised in that** a semipermeable filter/diaphragm valve (21) in the shape of a cylinder ring is inserted between the sealingly joined centre (2) and lower portions (3) into a cylindrical, stepped seating open towards the lower portion (3), of the centre portion (2), which seating in direction of the upper portion (1) includes the circumferential ventilation channel (25) and in direction of the lower portion (3) is sealed via the flange (36) thereof, and which, in the other direction, supports a threaded connection piece (26) for receiving the cap nut (14) to ensure strain relief.

5. The breathable cable/tube gland according to at least claims 1 to 4, **characterised in that** a supporting and sealing ring (22) is provided which as part of the centre portion (2) supports the filter/diaphragm valve (21) towards the cylindrical inner ventilation channel (25) and **in that** the supporting and sealing ring (22) and the filter/diaphragm valve (21) may be single-piece or multi-piece.

6. The breathable cable/tube gland according to at least claims 1 to 5, **characterised in that** the lower portion (3) consists of the hollow-cylindrical threaded connection piece (31), which when provided with the superimposed O-ring (35) is sealed in the housing wall by means of screwing into the thread or by means or a counter nut, and which on the inside terminates with the inner cylinder (34) and comprises a flange (36) widening towards the centre portion (2), the obliquely seated bores (32) thereof form the continuation of the ventilation channel from the filter/diaphram valve (21) with supporting and sealing ring (22) into the housing interior, and which is sealingly joined with the cylindrical seating of the centre portion (2).

7. The breathable cable/tube gland according to at least claims 1 to 6, **characterised in that** the parts holding the filter/diaphram valve (21) are moulded so as to allow a semi-permeable filter/diaphragm valve (21) to be constructed exchangeably and/or replaceably and/or in conjunction with the supporting and sealing ring (22).

8. The breathable cable/tube gland according to at least claims 1 to 7, **characterised in that** the shaping of the filter/diaphram valve (21) is adapted to match the shaping of the ventilation channel to be sealed.

9. The breathable cable/tube gland according to at least claims 1 to 8, **characterised in that** the spatial area of the innere cylinder (34), the outer sheath of the passed-through cable - detached from the bores (32) of the ventilation channel of the flange (36) of the lower portion (3), leading into the semi-permeable filter/diaphram valve (21) with supporting and sealing ring (22) - the circumferential internal ventilation channel (25) and the bore holes (24) of the outer hexagon (27) of the centre portion (2) form the aeration/deaeration of the cable/tube gland and determine the volume flow thereof in dependence of pressure and temperature.

10. The breathable cable/tube gland according to at least claims 1 to 9, **characterised in that** assembly of the portions (1, 2, 3) of the breathable cable/tube gland can be effected independently of the direction of rotation.

## Revendications

1. Passage de câble ou de tuyau respirant pour le passage étanche du point de vue mécanique et hydroscopique d'un côté d'un câble électrique blindé ou non blindé avec ou sans décharge de traction, avec ou sans protection contre la flexion pour ce câble, à travers une ouverture dans une paroi de boîtier, lequel est équipé d'un conduit d'aération (24, 25, 32) fermé avec un filtre ou une soupape à membrane (21) semi-perméable et est réalisé en 3 pièces se composant d'une partie supérieure (1), d'une partie médiane (2) et d'une partie inférieure (3),
**caractérisé en ce que**
- un hexagone mâle (27) est un élément constitutif de la partie médiane (2), et **en ce que** le conduit d'aération sur l'hexagone mâle est réalisé en tant qu'alésages (24), lesquels s'étendent perpendiculairement à la direction de traversée du passage de câble ou de tuyau,
- **en ce qu'**en prolongement des alésages (24), un conduit d'aération s'étend à l'intérieur (25) de la partie médiane (2) en forme de cylindre et perpendiculairement aux alésages et atteint là le conduit d'aération de la partie inférieure (3), moyennant quoi
- la partie inférieure se termine par une bride vers la partie médiane et un conduit d'aération de la partie inférieure (3) étant réalisé en tant qu'alésages (32) orientés en biais vers l'intérieur à partir de la bride (36), répartis sur la circonférence de la bride,
- un circuit de câblage (23) se terminant sur la partie médiane (2) devant la zone de sortie du conduit d'aération (32) en direction axiale.

2. Passage de câble ou de tuyau respirant selon la revendication 1, **caractérisé en ce que** le passage de câble ou de tuyau respirant en plusieurs pièces est assemblé à partir de la partie supérieure (1), de la partie médiane (2) et de la partie inférieure (3), moyennant quoi il est également possible que plusieurs pièces deviennent d'une seule pièce en fonction des matériaux ou grâce à des pré-montages correspondants.

3. Passage de câble ou de tuyau respirant selon au moins l'une des revendications 1 ou 2, **caractérisé en ce que** la partie supérieure (1) se compose d'un cylindre creux, lequel débouche dans une griffe de câble (12) moulée par injection, d'une bague d'étanchéité (13) préparée pour le diamètre extérieur de câble correspondant et d'un écrou borgne (14) provoquant l'étanchéité et la décharge de traction du câble par écrasement de câble, le cylindre creux formant le passage de câble (15) du côté interne, et une connexion serrée (18) du côté externe se terminant en forme de cône creux vers la partie médiane (2).

4. Passage de câble ou de tuyau respirant selon au moins l'une des revendications 1 à 3, **caractérisé en ce que**, entre la partie médiane (2) et la partie inférieure (3) assemblées de manière étanche, un filtre/soupape à membrane semi-perméable (21) sous la forme d'une bague cylindrique est inséré(e) dans un logement de la partie médiane (2) en forme de cylindre, étagé et ouvert vers la partie inférieure (3), lequel contient, vers la partie supérieure (1), le conduit d'aération (25) périphérique et est rendu étanche vers la partie inférieure (3) via la bride (36) de cette même, et qui porte dans l'autre direction une tubulure filetée (26) pour la réception de l'écrou borgne (14) pour la décharge de traction.

5. Passage de câble ou de tuyau respirant selon au moins l'une des revendications 1 à 4, **caractérisé en ce qu'**une bague de support et d'étanchéité (22) est prévue, laquelle porte, en tant que partie de la partie médiane (2), le filtre/soupape à membrane (21) vers le conduit d'aération (25) intérieur en forme de cylindre, et **en ce que** la bague de support et d'étanchéité (22) et le filtre/soupape à membrane (21) peuvent être d'une seule pièce ou en plusieurs pièces.

6. Passage de câble ou de tuyau respirant selon au moins l'une des revendications 1 à 5, **caractérisé en ce que** la partie inférieure (3) se compose d'une tubulure fileté (31) en forme de cylindre creux laquelle, munie d'un joint torique (35) coiffé dessus, ferme hermétiquement à l'aide d'un vissage dans un filetage ou avec un contre-écrou/écrou antagoniste dans la paroi du boîtier, et laquelle se termine côté intérieur avec le cylindre intérieur (34) et présente une bride (36) s'élargissant vers la partie médiane (2) dont les alésages positionnés en biais (32) prolongent le conduit d'aération du filtre/soupape à membrane (21) avec la bague de support et d'étanchéité (22) jusqu'à l'intérieur du boîtier et laquelle est assemblée de manière étanche avec le logement en forme de cylindre de la partie médiane (2).

7. Passage de câble ou de tuyau respirant selon au moins l'une des revendications 1 à 6, **caractérisé en ce que** les pièces tenant le filtre/soupape à membrane (21) sont formées de manière à ce qu'un filtre/soupape à membrane (21) semi-perméable soit réalisé(e) de manière remplaçable/échangeable et/ou également en liaison avec la bague de support et d'étanchéité (22).

8. Passage de câble ou de tuyau respirant selon au moins l'une des revendications 1 à 7, **caractérisé en ce que** la conformation du filtre/soupape à membrane (21) est adaptée à la conformation du conduit d'aération à étanchéifier.

9. Passage de câble ou de tuyau respirant selon au moins l'une des revendications 1 à 8, **caractérisé en ce que** la surface spatiale du cylindre intérieur (34), l'enveloppe extérieure du câble que l'on fait passer - de manière détachée des alésages (32) du conduit d'aération de la bride (36) de la partie inférieure (3), débouchant dans le filtre/soupape à membrane (21) semi-perméable avec bague de support et d'étanchéité (22) - le conduit d'aération (25) périphérique situé à l'intérieur, ainsi que les trous d'alésage (24) de l'hexagone mâle (27) de la partie médiane (2) forment l'aération/ventilation du passage de câble ou de tuyau et déterminent son débit volumique en fonction de la pression et de la température.

10. Passage de câble ou de tuyau respirant selon au moins l'une des revendications 1 à 9, **caractérisé en ce que** l'assemblage des pièces (1, 2, 3) du passage de câble ou de tuyau respirant peut s'effectuer indépendamment de la direction de rotation.
